(19) Europäisches Patentamt
European Patent Office
Office européen des brevets

(11) **EP 4 074 229 A1**

(12) **EUROPÄISCHE PATENTANMELDUNG**

(43) Veröffentlichungstag:
**19.10.2022 Patentblatt 2022/42**

(51) Internationale Patentklassifikation (IPC):
***A47J 31/46*** *(2006.01)*

(21) Anmeldenummer: **22168329.5**

(52) Gemeinsame Patentklassifikation (CPC):
**A47J 31/46**

(22) Anmeldetag: **14.04.2022**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **14.04.2021 DE 102021203654**

(71) Anmelder: **Sielaff GmbH & Co. KG Automatenbau
Herrieden
91567 Herrrieden (DE)**

(72) Erfinder:
• **SOLDNER, Patrick
91522 Ansbach (DE)**
• **WACHSMUTH, Christoph
91608 Geslau (DE)**

(74) Vertreter: **Isarpatent
Patent- und Rechtsanwälte Barth
Charles Hassa Peckmann & Partner mbB
Friedrichstrasse 31
80801 München (DE)**

(54) **AUSLASSVORRICHTUNG FÜR EINEN ODER IN EINEM ZUBEREITUNGSAUTOMATEN**

(57)    Die vorliegende Erfindung betrifft eine Auslassvorrichtung (1) für einen oder in einem Zubereitungsautomaten für flüssige Lebensmittel, insbesondere Getränke und/oder Suppen, mit einem Grundkörper (2), der einen sich zumindest abschnittsweise erweiternden Durchlass (11) und entlang einer Längsachse (3) zumindest zwei unterschiedlich große Innenquerschnittsflächen aufweist, mit einer Eintrittsöffnung (4) und einer Austrittsöffnung (5), die jeweils an einem Endbereich (6) des Grundkörpers (2) angeordnet sind, wobei der Grundkörper zumindest eine Diffusorstufe (7) ausbildet, welche zur Reduzierung der Geschwindigkeit eines Zubereitungsmediums (8) bei einem Durchlaufen von der Eintrittsöffnung (4) in Richtung der Austrittsöffnung (5) ausgebildet ist, so dass Verschmutzungen durch das Zubereitungsmedium durch Spritzer im Bereich eines Ausgabebereichs des Zubereitungsautomaten verringert werden. Des Weiteren betrifft die Erfindung einen Zubereitungsautomaten für flüssige Lebensmittel, insbesondere Getränke und/oder Suppen, umfassend zumindest eine Auslassvorrichtung.

FIG 2

EP 4 074 229 A1

**Beschreibung**

GEBIET DER ERFINDUNG

Die vorliegende Erfindung betrifft eine Auslassvorrichtung für einen oder in einem Zubereitungsautomaten für flüssige Lebensmittel, insbesondere Getränke und/oder Suppen. Des Weiteren betrifft die Erfindung einen Zubereitungsautomaten für flüssige Lebensmittel, insbesondere Getränke und/oder Suppen, umfassend zumindest eine Auslassvorrichtung.

TECHNISCHER HINTERGRUND

Zubereitungsautomaten für flüssige Lebensmittel sind beispielsweise als Getränkezubereitungsautomat oder Suppenzubereitungsautomat ausgebildet. Getränkezubereitungsautomaten werden zur Zubereitung von Heiß- oder Kaltgetränken eingesetzt. Bei Kaltgetränken kann es sich um Softdrinks oder ähnliches, bei Heißgetränken um jede Art eines Kaffees, Tees, Mischgetränks oder auch um Heißwasser handeln. Folglich kann es sich bei einem Heißgetränkeautomaten um einen Kaffeeautomaten, Kaffeevollautomaten oder Ähnliches handeln. Andere Heißgetränke, wie heiße Fruchtgetränke, Glühweine, Kakaogetränke oder dergleichen sind ebenso denkbar. Suppenzubereitungsautomaten werden beispielsweise zur Zubereitung von Instantsuppen verwendet. Im Folgenden wird vereinfacht die Bezeichnung Zubereitungsautomat für alle Arten heißer flüssiger Lebensmittel verwendet.

Produkte aus flüssigen Lebensmitteln wie Heißgetränke, Kaltgetränke oder Suppen werden aus zumindest einem Zubereitungsmedium hergestellt, das insbesondere ein Fluid darstellt. Dieses kann beispielsweise aus einer Flüssigkeit oder einem Flüssigkeitsgemisch bestehen. Ein weiteres Zubereitungsmedium kann ein Instantprodukt ein, das zur Herstellung des Produkts mit dem Fluid vermischt wird. Ferner kann es sich auch um frisch aufgebrühte flüssige Lebensmittel oder Mischungen mehrerer flüssiger Lebensmittel oder eines frisch aufgebrühten flüssigen Lebensmittels mit einem Instantprodukt handeln.

Je nach Produkt laufen im Inneren des Zubereitungsautomaten unterschiedliche Prozesse ab, bevor das flüssige Lebensmittel in einen Behälter, wie eine Tasse, einen Becher oder eine Schüssel, abgegeben wird. Der Behälter befindet sich in einem sogenannten Ausgabebereich des Zubereitungsautomaten, wenn das Zubereitungsmedium in den Behälter abgegeben wird.

Für ein optisch ansprechendes Produkt ist vor allem ein Auslaufverhalten des Zubereitungsmediums entscheidend, wenn das zumindest eine Zubereitungsmedium den Zubereitungsautomaten verlässt und in den Behälter abgegeben wird. Für gewöhnlich wird dafür ein sogenannter Auslauf eingesetzt, der als eine Auslassvorrichtung ausgebildet ist und das Zubereitungsmedium gezielt in Richtung des Behälters, insbesondere der Tasse oder des Bechers, lenkt. Der Auslauf ist an einem ersten Ende mit dem Zubereitungsautomaten verbunden, um das Zubereitungsmedium aus dem Zubereitungsautomaten in den Behälter zu leiten. Ein zweites Ende des Auslaufs ist in Richtung Behälter ausgerichtet und offen ausgebildet, sodass das Zubereitungsmedium nach abgeschlossener Verarbeitung im Zubereitungsautomaten in den Behälter abgegeben werden kann. Der komplette Auslauf wird demnach von dem Zubereitungsmedium durchflossen.

Nachteilig entstehen beim Aufprall des Zubereitungsmediums in dem Behälter Spritzer, die teilweise aus dem Behälter Herausspritzen und dadurch den Behälter sowie den Zubereitungsautomaten verschmutzen. Dies setzt sich insbesondere auch dann fort, wenn der Flüssigkeitspegel in dem Behälter ansteigt. Es entstehen umso mehr Spritzer und eine größere Verschmutzung im Ausgabebereich des Zubereitungsautomaten, je schneller das Zubereitungsmedium in den Behälter abgegeben wird. Dies hat zur Folge, dass der Zubereitungsautomat regelmäßig gereinigt werden muss.

Mit welcher Geschwindigkeit das Zubereitungsmedium auf dem Boden des Behälters bzw. auf dem ansteigenden Flüssigkeitspegel im Behälter auftrifft, hängt von der zurückgelegten Strecke seit Verlassen des Auslaufs sowie von der Austrittsgeschwindigkeit aus dem Auslauf ab. Vereinfacht kann hier auch angenommen werden, dass das Zubereitungsmedium aufgrund der Gravitation vertikal in den Behälter fließt.

Die Geschwindigkeit kann beispielsweise durch Minimierung der Fallhöhe, insbesondere durch einen höhenverstellbaren Behältertisch, reduziert werden. Eine andere Möglichkeit besteht darin, die Austrittsgeschwindigkeit aus dem Auslauf zu reduzieren. Nachteilig kann dies beispielsweise bei Kaffeeautomaten nicht durch die Reduzierung der Leistung der Pumpe erfolgen, da insbesondere bei der Zubereitung von Heißgetränken wie Kaffee ein konstant hoher Druck vorhanden sein muss.

Soll die Austrittsgeschwindigkeit reduziert werden, sollte dies vorteilhafterweise nach dem Zubereiten des Heißgetränks, Kaltgetränks oder der Suppe, und daher innerhalb des Auslaufs, erfolgen.

In der EP 2 705 782 A1 ist ein Zubereitungsautomat beschrieben, der im Bereich der Auslassvorrichtung einen sich erweiternden Querschnitt aufweist. An einer Austrittsöffnung ist ein Düsenring angeordnet, um eine gezielte Ausgabe des Zubereitungsmediums zu erzielen. Im Innern des sich erweiternden Querschnitts ist eine Spirale angeordnet, um eine Durchmischung, beispielsweise eines Pulvers mit einer Flüssigkeit, vor der Ausgabe des Zubereitungsmediums zu verbessern.

Nachteilig wird gerade durch den Düsenring, der in einer Kreisform angeordnete, einzelne Öffnungen aufweist, der Querschnitt an der Austrittsöffnung eingeengt. Auch wenn die Anzahl der Öffnungen verhältnismäßig hoch ist, so findet doch an jeder einzelnen Öffnung eine Querschnittsverengung statt, wodurch eine Aufstauung des Zubereitungsmediums hinter jeder Öffnung und eine anschließend beschleunigte Ausgabe des Zubereitungsmediums durch die Öffnungen resultiert, wobei jede der Öffnung als eine Art Düse fungiert. Die Ausgabegeschwindigkeit des Zubereitungsmediums kann dadurch nicht derart verringert werden, dass Spritzer bzw. Verschmutzungen im Bereich des Ausgabebereichs des Zubereitungsautomaten effektiv vermieden werden können.

ZUSAMMENFASSUNG DER ERFINDUNG

Vor diesem Hintergrund liegt der vorliegenden Erfindung die Aufgabe zugrunde, einen verbesserten Auslauf anzugeben, der Verschmutzungen durch Spritzer des Zubereitungsmediums vermeidet.

Erfindungsgemäß wird diese Aufgabe durch eine Auslassvorrichtung mit den Merkmalen des Patentanspruchs 1 und durch einen Zubereitungsautomaten mit den Merkmalen des Patentanspruchs 13 gelöst.

Demgemäß ist vorgesehen:

- Eine Auslassvorrichtung für einen oder in einem Zubereitungsautomaten für flüssige Lebensmittel, insbesondere Getränke und/oder Suppen, mit einem Grundkörper, der einen sich zumindest abschnittsweise erweiternden Durchlass und entlang einer Längsachse zumindest zwei unterschiedlich große Innenquerschnittsflächen aufweist, mit einer Eintrittsöffnung und einer Austrittsöffnung, die jeweils an einem Endbereich des Grundkörpers angeordnet sind, wobei der Grundkörper zumindest eine Diffusorstufe ausbildet, welche zur Reduzierung der Geschwindigkeit eines Zubereitungsmediums bei einem Durchlaufen von der Eintrittsöffnung in Richtung der Austrittsöffnung ausgebildet ist, so dass Verschmutzungen durch das Zubereitungsmedium durch Spritzer im Bereich eines Ausgabebereichs des Zubereitungsautomaten verringert werden.

- Ein Zubereitungsautomat für flüssige Lebensmittel, insbesondere Getränke und/oder Suppen, umfassend zumindest eine Auslassvorrichtung.

Die der vorliegenden Erfindung zugrunde liegende Erkenntnis besteht darin, dass durch den sich erweiternden Querschnitt des Durchlasses im Grundkörper eine Reduzierung der Austrittsgeschwindigkeit des Zubereitungsmediums in einem Heißgetränkeautomaten erreicht werden kann. Die Auslassvorrichtung ist dazu mit einem Durchlass und zumindest zwei unterschiedlich großen Innenquerschnittsflächen versehen und bildet daher eine Art Diffusor aus. Durch den Einsatz einer Auslassvorrichtung als Diffusor kann bei gleichbleibendem Volumenstrom die Fließgeschwindigkeit verringert werden. Mit anderen Worten setzt die Auslassgeometrie des Auslaufs das Prinzip eines Diffusors um. Ein Diffusor wirkt dabei genau gegenteilig zu einer Düse und verlangsamt so die Fließgeschwindigkeit.

Vorteilhafterweise ist die Diffusorstufe beabstandet zu der Austrittsöffnung in dem Grundkörper ausgebildet. Dies bedeutet, dass eine Querschnittsaufweitung nicht direkt an die Austrittsöffnung angrenzt, sondern beabstandet dazu in dem Grundkörper ausgebildet ist. Insbesondere ist der Grundkörper in einem Bereich zwischen der Diffusorstufe und der Austrittsöffnung mit einem konstanten Querschnitt ausgebildet, der insbesondere dem größten Querschnitt der Diffusorstufe entspricht. Dieser Bereich mit dem konstanten Querschnitt kann ein gekrümmter oder ein gerader Abschnitt sein.

In einer weiteren Ausführungsform ist die Diffusorstufe beabstandet zu der Eintrittsöffnung in dem Grundkörper ausgebildet. Dies bedeutet, dass eine Querschnittsaufweitung nicht direkt an die Eintrittsöffnung angrenzt, sondern beabstandet dazu in dem Grundkörper ausgebildet ist. Insbesondere ist der Grundkörper in einem Bereich zwischen der Diffusorstufe und der Eintrittsöffnung mit einem konstanten Querschnitt ausgebildet, der insbesondere dem kleinsten Querschnitt der Diffusorstufe entspricht. Dieser Bereich mit dem konstanten Querschnitt kann ein gekrümmter oder ein gerader Abschnitt sein.

Damit kann die Diffusorstufe in einer weiteren Ausführungsform beabstandet zu der Eintrittsöffnung und beabstandet zu der Austrittsöffnung angeordnet sein.

Bevorzugt ist die Austrittsöffnung ein offener Querschnitt. Dies bedeutet, dass der komplette Querschnitt ohne Barrieren, insbesondere ohne einzelne Düsen, Leitbleche oder Ähnliches, ausgebildet ist. Da die Fließgeschwindigkeit bereits ausreichend verringert vorliegt und die Fließrichtung durch die Diffusorstufe nicht ungünstig beeinflusst wird, können Leitbelche oder Umlenkbleche in der Austrittsöffnung entfallen.

Vorteilhafterweise ist die komplette Diffusorstufe ohne im Innern angeordnete Barrieren bzw. Leitbleche ausgeführt. Dies bedeutet, dass die Diffusorstufe bevorzugt einen durchgängig offenen Querschnitt aufweist. Dadurch kann der komplette Querschnitt über die Länge der Diffusorstufe zur beruhigten Abbremsung des Zubereitungsmediums genutzt werden.

Die der vorliegenden Erfindung zugrundeliegende Idee besteht darin, dass durch die Auslassvorrichtung die Verschmutzungen durch das Zubereitungsmedium, insbesondere durch Spritzer im Bereich des Ausgabebereichs des Zubereitungsautomaten, verringert werden können. Insbesondere auffällig sichtbare Kaffee-, Espresso- oder Suppenflecken am Behälter oder im Ausgabebereich können dadurch reduziert werden, was zu einem ästhetischeren Anblick bei der Ausgabe des flüssigen Lebensmittels, insbesondere des Heißgetränks, Kaltgetränks oder der Suppe, führt.

Durch die geringere Austrittsgeschwindigkeit resultiert eine geringere Aufprallgeschwindigkeit des Zubereitungsmediums im Behälter. Dies hat zur Folge, dass sowohl die Spritzer im Behälter als auch die Spritzer rund um den Behälter geringer ausfallen. Daraus resultieren ebenso geringere Verschmutzungen des Zubereitungsautomaten, wodurch die Wartungs- und Reinigungsintervalle verlängert werden können. Dies wiederum führt zu einer Reduzierung der laufenden Reinigungskosten der Auslassvorrichtung bzw. des Zubereitungsautomaten.

Die Austrittsgeschwindigkeit des Zubereitungsmediums kann um bis zu 70 % gegenüber bekannten Ausläufen reduziert werden. Dies ist insbesondere auch für Kaltgetränkeautomaten von Bedeutung, bei welchen ein beruhigtes Auslaufverhalten des Zubereitungsmediums aus der Auslassvorrichtung vorteilhaft ist. Des Weiteren kann somit auch ein ungewolltes Schäumen eines ausgegebenen kohlesäurehaltigen Getränks, beispielsweise bei Softdrinks, reduziert oder vermieden werden.

Darüber hinaus kann mit einer derartigen Auslassvorrichtung auch eine sehr geringe Austrittsgeschwindigkeit bei der Ausgabe von Espresso erzielt werden, sodass bei Zubereitung beispielsweise eines Latte Macchiato eine verbesserte und eindeutigere Schichtung erzielt werden kann. Vorteilhaft ist hier insbesondere, dass der komplette Querschnitt der Austrittsöffnung zur Ausgabe des Espresso genutzt werden kann. Dadurch kann der Durchmesser der Austrittsöffnung im Vergleich zum Behälter, d. h. im Verhältnis zu einer Espressotasse, so gering wie möglich ausgeführt sein.

Ebenso kann sich die Austrittsgeschwindigkeit positiv auf die Ausbildung eines großvolumigen oder feinporigen Schaumes, beispielsweise bei der Zubereitung von Caffe Creme oder Cappuccino, auswirken.

Vorteilhafterweise ist demnach allgemein, dass trotz der Diffusorstufe die Austrittsöffnung klein im Verhältnis zu einem Durchmesser eines Behälters ausgebildet ist, der befüllt werden soll. Dadurch kann besonders effektiv eine Verschmutzung in dem Ausgabebereich vermieden werden. Ein verhältnismäßig kleiner Durchmesser kann insbesondere dadurch erreicht werden, dass die komplette Fläche der Austrittsöffnung frei ausgebildet ist und zur Ausgabe des Zubereitungsmediums, im Folgenden auch als Flüssigkeit bezeichnet, genutzt werden kann. Insbesondere sind daher an der Austrittsöffnung keine Barrieren, beispielsweise in Form eines Düsenrings oder Ähnlichem, angeordnet.

Insbesondere wird der komplette Querschnitt der Austrittsöffnung zur Ausgabe der Flüssigkeit genutzt. Dies bedeutet, dass ein Volumenstrom, der von der Eintrittsöffnung in Richtung der Austrittsöffnung fließt, ohne Querschnittsverengungen aus dem Grundkörper geleitet werden kann. So können insbesondere auch Verwirbelungen vermieden werden, wodurch eine beruhigte Ausgabe der Flüssigkeit erzielt wird.

Ferner ist es auf diese Weise vorteilhaft möglich, die Auslassvorrichtung platzsparend auszubilden, wobei insbesondere die Geometrie des Grundkörpers an unterschiedliche Anforderungen, insbesondere an den vorhandenen Bauraum, angepasst werden kann. Werden mehrere Zubereitungsmedien zur Zubereitung eines Produkts benötigt, kann für jedes Zubereitungsmedium eine separate Auslassvorrichtung und damit eine eigene Zuleitung bereitgestellt werden. So kann beispielsweise eine separate Auslassvorrichtung für Kaffee und für Milch bei der Zubereitung von Milchkaffee bereitgestellt werden. Die unterschiedlichen Zubereitungsmedien können dadurch mit individuell angepassten Geschwindigkeiten dem Behälter zugeführt werden.

Mit Geschwindigkeit ist insbesondere die Fließgeschwindigkeit des Zubereitungsmediums im Auslauf, d. h. in der Auslassvorrichtung, oder im Bereich der Fallhöhe zwischen Auslassvorrichtung und Behälter zu verstehen. Bei dem Zubereitungsmedium kann es sich um ein Fluid oder um ein rieselfähiges Produkt handeln, das zur Herstellung des flüssigen Lebensmittels, insbesondere des Getränks oder der Suppe, verwendet wird.

Der Grundkörper der Auslassvorrichtung kann unterschiedliche Ausgestaltungen aufweisen. Beispielsweise kann der Grundkörper aus einem Rohrprofil ausgebildet sein, das in unterschiedlichen Teilbereichen unterschiedlich große Innenquerschnittsflächen aufweist, um einen sich zumindest abschnittsweise erweiternden Durchlass auszubilden. Ebenso kann der Grundkörper und/oder der Durchlass einen elliptischen, quadratischen, viereckigen, vieleckigen oder anders geformten Querschnitt aufweisen. Es ist ebenso denkbar, dass der Grundkörper in unterschiedlichen Teilabschnitten unterschiedlich geformte Innenquerschnitte aufweist. Ein Außenquerschnitt des Grundkörpers kann eine von dem Innenquerschnitt unabhängig Form aufweisen oder mit einem parallelen Verlauf ausgebildet sein. Bevorzugt ist der Grundkörper einteilig ausgebildet. Insbesondere weist der Grundkörper keine Verengungen und/oder keine innenliegenden Umlenkelemente auf, die quer oder geneigt zu der Strömungsrichtung der Flüssigkeit ausgerichtet sind.

Als Diffusorstufe ist zumindest ein Teilabschnitt des Grundkörpers zu verstehen, welcher den sich erweiternden Durchlass aufweist. Als sich erweiternder Durchlass ist eine Aufweitung des Innenquerschnitts des Grundkörpers entlang der Längsachse des Grundkörpers zu verstehen. Vorteilhafterweise ist der Querschnitt über die komplette Länge offen ausgebildet, wobei insbesondere keine Blenden oder Düsenelemente, wie beispielsweise ein Düsenring, innerhalb des Querschnitts angeordnet sind. Insbesondere erfolgt die Aufweitung stetig. In einer Querschnittsansicht längs durch den Grundkörper gesehen kann eine Oberfläche des Durchlasses eine Gerade oder eine Kurvenform beschreiben und sich beispielsweise parabolisch oder linear aufweiten.

Die Diffusorstufe kann in einem beliebigen Teilabschnitt des Grundkörpers angeordnet sein, und beispielsweise näher an der Eintrittsöffnung oder näher an der Austrittsöffnung liegen. Im Übrigen Bereich kann der Grundkörper einen konstanten Innenquerschnitt aufweisen, insbesondere in einem Bereich zwischen der Diffusorstufe und der Austrittsöffnung, der jeweils dem an den Teilbereich angrenzenden Innenquerschnitt der Diffusorstufe entspricht.

Die Längsachse bildet bevorzugt die Mittelachse des Grundkörpers aus und kann mit der Mittelachse des Durchlasses übereinstimmen. Insbesondere verläuft die Längsachse in jedem Bereich des Grundkörpers durch den Mittelpunkt der jeweiligen Innenquerschnittsfläche. Die Längsachse kann auch einer gekrümmten Bahn folgen.

Der Zubereitungsautomat umfasst zumindest eine Auslassvorrichtung in einem Ausgabebereich, wobei in dem Ausgabebereich ein Behälter zur Aufnahme des Produkts anordenbar ist.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform kann die Diffusorstufe beabstandet zu der Austrittsöffnung und/oder zu der Eintrittsöffnung angeordnet sein, wobei insbesondere der Grundkörper in einem Bereich zwischen der Diffusorstufe und der Austrittsöffnung einen konstanten Querschnitt aufweist.

Vorteilhafterweise kann ein Verspritzen weiterhin dadurch verhindert werden, dass die Diffusorstufe beabstandet zu der Austrittsöffnung angeordnet ist. Die Flüssigkeit wird daher zunächst in der Diffusorstufe verlangsamt, durchläuft mit der verlangsamten Geschwindigkeit einen Bereich bis zur Austrittsöffnung, insbesondere einen Bereich mit einem konstanten Querschnitt, und wird dann an den Behälter abgegeben. Der Bereich kann eine Länge aufweisen, die im Wesentlichen der Länge der Diffusorstufe entspricht. Weiterhin kann der Bereich länger oder kürzer als die Länge der Diffusorstufe ausgebildet sein. Bevorzugt kann die Flüssigkeit daher in einer laminaren, und damit beruhigten Strömung an den Behälter abgegeben werden.

Gemäß einer vorteilhaften Ausführungsform kann der Grundkörper als Rohrkörper mit einem sich zumindest abschnittsweise von der Eintrittsöffnung in Richtung der Austrittsöffnung erweiternden Rohrquerschnitt ausgebildet sein. Vorteilhaft ist die Ausbildung des erweiternden Rohrquerschnitts zur Ausbildung einer Diffusorstufe an jeder beliebigen Position und/oder über eine beliebige Länge des Grundkörpers möglich. Eine Verringerung der Fließgeschwindigkeit des Zubereitungsmediums in der Auslassvorrichtung kann über einen Teilabschnitt des Durchlasses oder auch über die komplette Länge des Durchlasses erreicht werden. Vorteilhafterweise ist die Diffusorstufe jedoch beabstandet zu der Austrittsöffnung angeordnet.

Gemäß einer vorteilhaften Ausführungsform ist eine Querschnittsfläche der Eintrittsöffnung kleiner als eine Querschnittsfläche der Austrittsöffnung ausgebildet. Gemäß einer Weiterbildung können eine Querschnittsfläche der Eintrittsöffnung und eine Querschnittsfläche der Austrittsöffnung mit einem Verhältnis zueinander in einem Bereich von 0,9:2 bis 1,5:2 ausgebildet sein. Beispielsweise kann die Eintrittsöffnung einen Durchmesser von 3 mm bis 5 mm, insbesondere 4 mm bis 5 mm bevorzugt 4,5 mm, und die Austrittsöffnung einen Durchmesser von 6 bis 9 mm, insbesondere 7,5 mm bis 8,5 mm, bevorzugt 8 mm aufweisen. Somit sind bevorzugt auch Verhältnisse zueinander in einem engeren Bereich von 1:2 bis 1,2:2 möglich. Die Austrittsöffnung ist insbesondere als offener Querschnitt ausgebildet, sodass der komplette Querschnitt zur Durchströmung genutzt werden kann.

In einer anderen Ausführungsform können die Eintrittsöffnung und/oder die Austrittsöffnung mit den Randbereichen der Diffusorstufe übereinstimmen, wenn die Diffusorstufe an die Eintrittsöffnung und/oder Austrittsöffnung angrenzt.

Gemäß einer weiteren Ausführungsform kann die Diffusorstufe über die komplette Länge des Grundkörpers ausgebildet sein. Die Aufweitung des Innenquerschnitts des Grundkörpers kann stetig erfolgen und/oder abschnittsweise unterschiedliche Steigungen aufweisen. Die Steigung beschreibt eine Steigung einer Linie bzw. Kurve, welche die Oberfläche des Durchlasses im Grundkörper im Bereich der Diffusorstufe in einer Querschnittsansicht längs durch den Grundkörper ausbildet. Vorteilhaft kann durch die Steigung der Linie oder Kurve die Reduzierung der Fließgeschwindigkeit des Zubereitungsmediums innerhalb des Durchlasses gesteuert werden. Auch in dieser Ausführungsform kann ein Teilbereich zwischen der Diffusorstufe und der Austrittsöffnung mit einem konstanten Querschnitt ausgebildet sein, der dem Querschnitt am Ende der Diffusorstufe entspricht.

Gemäß einer vorteilhaften Ausführungsform kann die Diffusorstufe über maximal ein Drittel der Länge des Grundkörpers ausgebildet sein. Maximal ein Drittel der Länge des Grundkörpers umfasst einen Teilbereich der Länge von etwa einem Drittel oder weniger. Vorteilhaft kann auf diese Weise die Fließgeschwindigkeit des Zubereitungsmediums auch über einen kürzeren Teilabschnitt in hohem Maße abgesenkt werden. Auf diese Weise werden auch mehrere Diffusorstufen nacheinander innerhalb des Grundkörpers ermöglicht. Die Diffusorstufe kann in einem beliebigen Abschnitt entlang der Längsachse des Grundkörpers angeordnet sein, beispielsweise in einem mittleren Abschnitt.

Gemäß einer bevorzugten Ausführungsform kann die Längsachse des Grundkörpers in einer abgewinkelten und/oder gekrümmten Bahn verlaufen. Auf diese Weise kann die Geometrie der Auslassvorrichtung quasi kurvenförmig ausgebildet sein, wobei die abgewinkelte und/oder gekrümmte Bahn in einer horizontalen und/oder in einer vertikalen Ebene liegen kann. Die Geometrie des Grundkörpers ist nicht auf eine in einer Ebene liegende Struktur beschränkt. Dadurch kann die Form des Grundkörpers an unterschiedlichen zur Verfügung stehenden Bauraum angepasst werden.

Gemäß einer besonders bevorzugten Ausführungsform kann der Grundkörper als Krümmer ausgebildet sein. Vorzugsweise handelt es sich um einen 90°-Krümmer. Vorteilhafterweise kann die Zuführung des Zubereitungsmediums in den Grundkörper in horizontaler Richtung erfolgen, während die Ausgabe des Zubereitungsmediums in vertikaler Richtung erfolgt. Dadurch kann das Zubereitungsmedium direkt vertikal in den Behälter abgegeben werden.

Gemäß einer vorteilhaften Ausführungsform kann die Diffusorstufe in einem geraden Abschnitt des Grundkörpers und/oder in einem gekrümmten Abschnitt des Grundkörpers angeordnet sein. Vorteilhaft kann dadurch die Form des Grundkörpers ebenso die Fließgeschwindigkeit beeinflussen.

Gemäß einer Weiterbildung kann der Grundkörper zumindest zwei Diffusorstufen umfassen, die hintereinander durch die Form des Durchlasses im Grundkörper ausgeformt sind. Auf diese Weise kann eine Art Doppeldiffusor ausgebildet werden, der durch eine zweifache Innenquerschnittserweiterung des Grundkörpers ausgeführt ist. Eine erste Innenquerschnittserweiterung zur Ausbildung einer ersten Diffusorstufe kann beispielsweise in einem horizontal verlaufenden Abschnitt des Grundkörpers angeordnet sein. Eine zweite Innenquerschnittserweiterung zur Ausbildung einer zweiten Diffusorstufe kann sich über eine Krümmung des Grundkörpers erstrecken. In einer weiteren Ausführungsform sind auch mehr als zwei bzw. eine größere Vielzahl von Diffusorstufen möglich.

Die Steigung der Aufweitung des Innenquerschnitts kann in allen Diffusorstufen unterschiedlich ausgebildet sein.

Bei einer vorteilhaften Ausführungsform kann zumindest ein Leitblech innerhalb des Grundkörpers, insbesondere innerhalb des Durchlasses, angeordnet sein. Vorteilhafterweise kann dadurch der Wirkungsgrad der Auslassvorrichtung bezüglich einer Anpassung bzw. Minimierung der Fließgeschwindigkeit optimiert werden.

Gemäß einer vorteilhaften Ausführungsform kann die zumindest eine Diffusorstufe zur Reduzierung der Geschwindigkeit des Zubereitungsmediums zwischen der Eintrittsöffnung und der Austrittsöffnung um zumindest die Hälfte ausgelegt sein. Auf diese Weise können Verschmutzungen im Ausgabebereich und am Behälter vorteilhaft vermieden werden.

Gemäß einer vorteilhaften Ausführungsform kann die Auslassvorrichtung als ein Spritzgussteil ausgebildet sein. Vorteilhaft kann dadurch jede beliebige Innenquerschnittsaufweitung und/oder Geometrie des Grundköpers durch ein einteiliges Bauteil ausgebildet werden.

Gemäß einer Ausführungsform des Zubereitungsautomaten kann die Eintrittsöffnung der Auslassvorrichtung mit einem das Zubereitungsmedium fördernden Förderschlauch des Zubereitungsautomaten verbunden sein, und die Austrittsöffnung kann als ein freies Ende zur Ausgabe des Zubereitungsmediums in einen Behälter ausgebildet sein. Vorteilhaft ist auf diese Weise ein direkter Anschluss der Auslassvorrichtung möglich, wodurch weiter Bauraum eingespart werden kann. Das freie Ende ist bevorzugt vertikal nach unten ausgerichtet und direkt oberhalb des Behälters angeordnet. Das freie Ende ist bevorzugt nicht Teil der Diffusorstufe, sondern ein Bereich des Grundkörpers, der einen konstanten Querschnitt aufweist.

Dadurch kann besonders vorteilhaft eine beruhigte Ausgabe der Flüssigkeit erreicht werden.

Gemäß einer vorteilhaften Ausführungsform des Zubereitungsautomaten können zumindest zwei Auslassvorrichtungen umfasst sein, welche jeweils unterschiedliche Innenquerschnittsflächen in der Eintrittsöffnung und/oder in der Austrittsöffnung aufweisen. Vorteilhaft ist jede Auslassvorrichtung mit einem separaten Förderschlauch verbunden, sodass unterschiedliche Zubereitungsmedien gleichzeitig oder versetzt dem Behälter zugeführt werden können, ohne dass sich die Zubereitungsmedien vor dem Eintreffen in dem Behälter vermischen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:

Fig. 1     eine Ausführungsform einer Auslassvorrichtung in einer Längsquerschnittsdarstellung;

Fig. 2     eine weitere Ausführungsform einer Auslassvorrich-tung in einer Längsquerschnittsdarstellung;

Fig. 3     eine Ausführungsform eines Ausgabebereichs eines Zubereitungsautomaten in einer isometrischen Darstellung;

Fig. 4     eine weitere Ausführungsform einer Auslassvorrichtung in einer Längsquerschnittsdarstellung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

BESCHREIBUNG VON AUSFÜHRUNGSBEISPIELEN

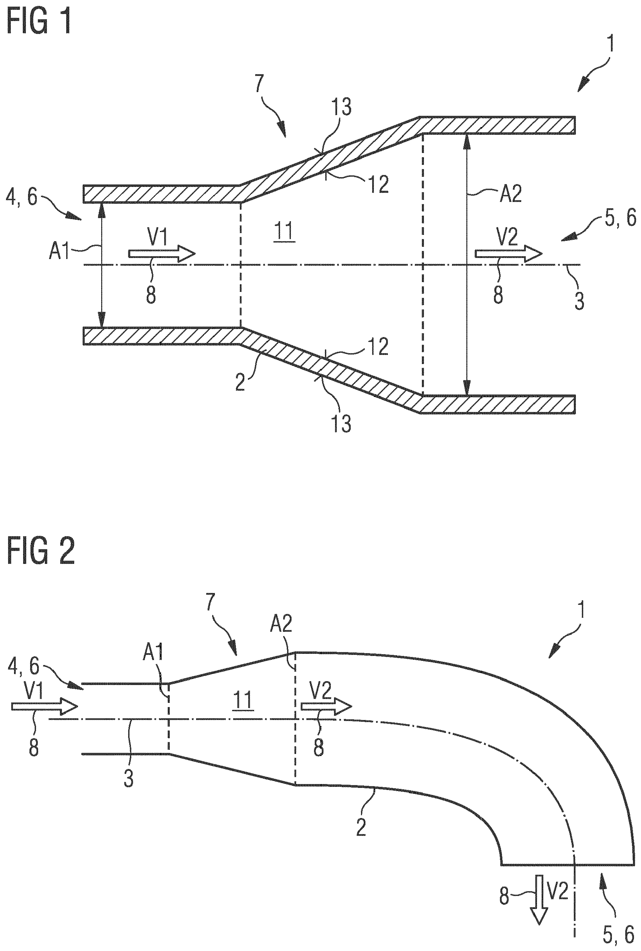

Fig. 1 zeigt einen Querschnitt entlang einer Längsachse 3 durch eine Ausführungsform einer Auslassvorrichtung 1 mit einer Diffusorstufe 7. Die Diffusorstufe 7 wird durch einen sich abschnittsweise erweiternden Durchlass 11 im Grundkörper 2 gebildet. Daher weist der Grundköper 2 entlang der Längsachse 3 rechts und links von der Diffusorstufe 7 zwei unterschiedlich große Innenquerschnittsflächen auf. Die Innenquerschnittsflächen sind in Fig. 1 durch die Innenquerschnitte A1, A2 gekennzeichnet. Auf der in der Darstellung linken Seite ist an einem Endbereich 6 der Auslassvorrichtung 1 eine Eintrittsöffnung 4 angeordnet, durch welche ein Zubereitungsmedium 8 in die Auslassvorrichtung 1 eingeleitet werden kann. Auf der in der Darstellung rechten Seite ist in einem zweiten Endbereich 6 eine Austrittsöffnung 5 angeordnet, die zur Ausgabe des Zubereitungsmediums 8 in einen Behälter (nicht dargestellt) dient.

In Fig. 1 ist die Diffusorstufe 7 in einem mittleren Abschnitt entlang der Längsachse 3 des Grundkörpers 2 angeordnet, sodass in der Darstellung rechts und links von der Diffusorstufe 7 jeweils ein Bereich mit einem konstanten Querschnitt dargestellt ist. Der in der Darstellung rechte Bereich liegt zwischen der Austrittsöffnung 5 und der Diffusorstufe 7. Durch diesen Bereich mit einem konstanten Querschnitt, der dem Querschnitt am Ende der Diffusorstufe 7 entspricht, kann eine laminare Strömung erzielt werden, wodurch das Zubereitungsmedium 8, allgemein bezeichnet als Flüssigkeit, beruhigt ausgegeben werden kann. Dadurch können besonders vorteilhaft Spritzer vermieden werden.

Die Auslassvorrichtung 1 weist in dieser Ausführungsform eine stetige Aufweitung des Durchlasses 11 auf, die durch eine konstante Steigung der Oberfläche 12 des Durchlasses 11 in einem mittleren Abschnitt des Grundkörpers 2 erkennbar ist. In dieser Ausführungsform haben die Oberfläche 12 des Durchlasses 11 und eine Außenoberfläche 13 des Grundkörpers 2 einen parallelen Verlauf, sodass der Grundkörper 2 eine konstante Wandstärke aufweist.

Das Strömungsprofil in der Auslassvorrichtung 1 kann idealisiert über die Kontinuitätsgleichung der Strömungsmechanik bestimmt werden. Gemäß der Kontinuitätsgleichung:

$$\dot{V}_1 = \dot{V}_2$$

die den Volumenstrom in einem Rohrquerschnitt für inkompressible Medien als konstant annimmt, ergibt sich durch Einsetzen des ersten und zweiten Innenquerschnitts A1, A2 und der Geschwindigkeiten v1, v2 folgende Durchflussgleichung:

$$A_1 \cdot v_1 = A_2 \cdot v_2$$

Wird die Formel nach der Auslassgeschwindigkeit v2 umgestellt ergibt sich für V2:

$$v_2 = \frac{A_1 \cdot v_1}{A_2}$$

Nach dieser Formel wird die Auslassgeschwindigkeit V2 kleiner je größer A2 ist, sodass durch die Auslassvorrichtung 1 die Geschwindigkeit des Zubereitungsmediums 8 beim Durchlaufen durch den Durchlass 11 bzw. Grundkörper 2 verringert wird. Die Auslassvorrichtung 1 benötigt eine entsprechende Wirkstrecke, daher sollte A2 nicht zu groß gewählt werden, wenn die Länge der Auslassvorrichtung 1 nicht beliebig groß ausgeführt werden kann.

Fig. 2 zeigt eine weitere Ausführungsform einer Auslassvorrichtung 1 in einer Längsquerschnittsdarstellung. Der Querschnitt des Grundkörpers 2 ist vereinfacht als Linie dargestellt, sodass die Oberfläche 12 und die Außenoberfläche 13 nicht im Detail sichtbar sind. Die Längsachse 3 des Durchlasses 11 entspricht der Längsachse des Grundkörpers 2 und verläuft in einer abgewinkelten bzw. gekrümmten Bahn. In der dargestellten Ausführungsform ist der Grundkörper 2 als eine Art 90°-Krümmer ausgebildet.

Die Diffusorstufe 7 ist in der dargestellten Ausführungsform in einem horizontalen Abschnitt des Grundkörpers 2 angeordnet. In einer nicht dargestellten Ausführungsform kann die Diffusorstufe 7 in einem vertikalen bzw. gekrümmten Abschnitt angeordnet sein. Vorteilhafterweise ist auch in der nicht dargestellten Ausführungsform die Diffusorstufe 7 beabstandet zu der Austrittsöffnung 5 angeordnet.

Auf der rechten Seite an der Eintrittsöffnung 4 kann die Geschwindigkeit v1 beispielsweise 0.7 m/s betragen. An der Austrittsöffnung 5 kann die Geschwindigkeit v2 durch die Auslassvorrichtung 1 auf 0.25 m/s reduziert werden. Insbesondere kann die Geschwindigkeit zumindest um die Hälfte reduziert werden.

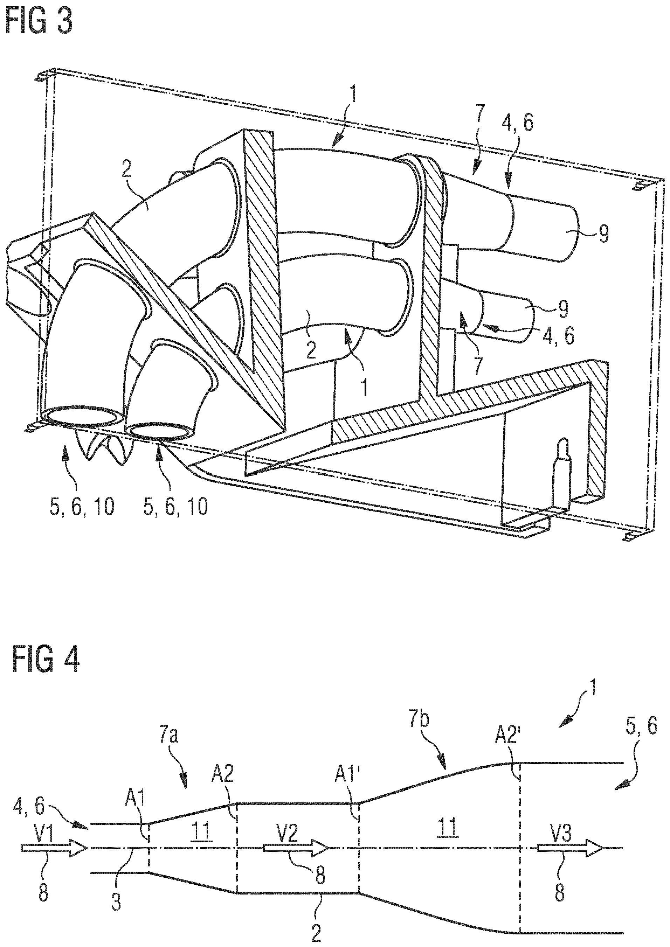

Fig. 3 zeigt eine Ausführungsform eines Ausgabebereichs eines Zubereitungsautomaten in einer isometrischen Darstellung. Der Ausgabebereich umfasst zwei in der Größe unterschiedlich ausgeführte Auslassvorrichtungen 1. An dem jeweiligen rechten Endbereich 6 jeder Auslassvorrichtung 1 ist ein Förderschlauch 9 angeordnet und mit der jeweiligen Eintrittsöffnung 4 verbunden, beispielsweise aufgesteckt. Die jeweilige Austrittsöffnung 5, die im linken Bereich als freies Ende 10 ausgebildet ist, ist vertikal nach unten ausgerichtet und leitet das Zubereitungsmedium 8 in einen Behälter (nicht dargestellt). Die zwei dargestellten Auslassvorrichtungen 1 weisen insgesamt unterschiedlich große Innenquerschnitte und Außenquerschnitte auf, wobei die insgesamt mit einem kleineren Innenquerschnitt ausgeführte Auslassvorrichtung 1 für Kaffee bzw. Espresso, und die insgesamt mit einem größeren Innenquerschnitt ausgeführte Auslassvorrichtung 1 für Milch- bzw. Instantprodukte vorgesehen sein kann. Beide Austrittsöffnungen 5 sind komplett offen ausgebildet, sodass der komplette Querschnitt zur Ausgabe des Zubereitungsmediums 8 genutzt werden kann. Dadurch kann erreicht werden, dass die Austrittsöffnung 5 trotz der Aufweitung der Diffusorstufe 7 relativ klein im Verhältnis zu einem Durchmesser eines Behälters (nicht dargestellt) ausgebildet sein kann. Verspritzer in bzw. am Behälter sowie im Ausgabebereich des Zubereitungsautomaten können dadurch besonders effektiv vermieden werden.

Die Anordnung der zwei Auslassvorrichtungen 1 kann eine Länge von 50 mm bis 70 mm, insbesondere 60,5 mm und eine Höhe von 20 mm bis 40 mm, insbesondere 29 mm, aufweisen. Die beiden Auslassvorrichtungen 1 sind im Ausgabebereich durch eine Haltestruktur positioniert. Es ist ebenso denkbar, mehr als zwei Auslassvorrichtungen 1 in der Haltestruktur anzuordnen, insbesondere, wenn mehr als zwei unterschiedliche Zubereitungsmedien dem Behälter zugeführt werden sollen.

Fig. 4 zeigt eine weitere Ausführungsform einer Auslassvorrichtung 1 in einer Querschnittsdarstellung, wobei die Auslassvorrichtung 1 als eine Art Doppeldiffusor ausgebildet ist. Die Auslassvorrichtung 1 umfasst eine erste Diffusorstufe 7a und eine zweite Diffusorstufe 7b, die hintereinander entlang der Längsachse 3 des Grundkörpers bzw. der Auslassvorrichtung 1 angeordnet sind. Durch die erste Diffusorstufe 7a kann die Geschwindigkeit v1 des Zubereitungsmediums 8 auf v2 und durch die zweite Diffusorstufe 7b auf v3 reduziert werden.

Die Aufweitung des Innenquerschnitts in den Diffusorstufen 7a, 7b kann stetig erfolgen und abschnittsweise unterschiedliche Steigungen aufweisen. In der dargestellten Ausführungsform erfolgt die Aufweitung in der Diffusorstufe 7a stetig mit einer konstanten Steigung, sodass die Querschnittsdarstellung des Grundkörpers 2 bzw. des Durchlasses eine gerade Linie beschreibt. In der Diffusorstufe 7b nimmt die Steigung in Richtung der Austrittsöffnung 5 ab, sodass sich der Grundkörper 2 bzw. der Durchlass 11 in Richtung Austrittsöffnung 5 weniger stark erweitern und die Querschnittsdarstellung des Grundkörpers 2 eine Kurve beschreibt bzw. gekrümmt ausgebildet ist.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

In einer nicht dargestellten Ausführungsform kann sich die zweite Diffusorstufe 7b beispielsweise über einen gekrümmten Bereich des Grundkörpers 2 erstrecken, der vertikal und/oder horizontal verläuft. Ebenso kann der Grundkörper 2 eine von dem sich erweiternden Durchlass 11 unabhängige Form aufweisen, sodass sich die Wandstärke des Grundkörpers 3 entlang der Längsachse 3 verändert.

Weiterhin kann die Diffusorstufe 7 in einem beliebigen Teilabschnitt des Grundkörpers 2 angeordnet sein, und beispielsweise näher an der Eintrittsöffnung 4 oder näher an der Austrittsöffnung 5 liegen.

Ebenso kann sich der Durchlass 11 im Bereich der Diffusorstufe 7 über die Längsachse 3 überproportional erweitern, sodass die Oberfläche 12 des Durchlasses 11 in einer Längsquerschnittsdarstellung eine parabolische Kurve beschreibt und eine Steigung von > 1 aufweist. Dies kann eine besonders effektive Reduzierung der Geschwindigkeit bewirken.

Es ist weiterhin denkbar, Leitbleche in den Grundköper 2 zu integrieren, um die Reduzierung der Geschwindigkeit des Zubereitungsmediums 8 im Grundkörper 2 gezielt zu steuern. Diese Leitbleche sind bevorzugt nur im Bereich zwischen der Eintrittsöffnung und der Diffusorstufe angeordnet, um im Richtung der Austrittsöffnung eine laminare und damit beruhigte Strömung zu erreichen und die Austrittsöffnung nicht zu beeinflussen.

Allen Ausführungsformen ist vorteilhafterweise gemein, dass die Austrittsöffnung einen komplett offenen Querschnitt aufweist, um den kompletten Durchmesser des Querschnitts zur Ausgabe des Zubereitungsmediums nutzen zu können.

Bezugszeichenliste

| 1 | Auslassvorrichtung |
|---|---|
| 2 | Grundkörper |
| 3 | Längsachse |
| 4 | Eintrittsöffnung |
| 5 | Austrittsöffnung |
| 6 | Endbereich |
| 7 | Diffusorstufe |
| 7a | Diffusorstufe |
| 7b | Diffusorstufe |
| 8 | Zubereitungsmedium |
| 9 | Förderschlauch |
| 10 | freies Ende |
| 11 | Durchlass |
| 12 | Oberfläche |
| 13 | Außenoberfläche |
| A1 | erster Innenquerschnitt |
| A2 | zweiter Innenquerschnitt |
| V1 | Geschwindigkeit |
| V2 | Geschwindigkeit |
| V3 | Geschwindigkeit |

**Patentansprüche**

1. Auslassvorrichtung (1) für einen oder in einem Zubereitungsautomaten für flüssige Lebensmittel, insbesondere Getränke und/oder Suppen,

   mit einem Grundkörper (2), der einen sich zumindest abschnittsweise erweiternden Durchlass (11) und entlang einer Längsachse (3) zumindest zwei unterschiedlich große Innenquerschnittsflächen aufweist,
   mit einer Eintrittsöffnung (4) und einer Austrittsöffnung (5), die jeweils an einem Endbereich (6) des Grundkörpers (2) angeordnet sind,
   wobei der Grundkörper (2) zumindest eine Diffusorstufe (7) aufweist, welche zur Reduzierung der Geschwindigkeit (v) eines Zubereitungsmediums (8) bei einem Durchlaufen von der Eintrittsöffnung (4) in Richtung der Austrittsöffnung (5) derart angeordnet und ausgebildet ist, dass Verschmutzungen durch das Zubereitungsmedium (8) durch Spritzer im Bereich eines Ausgabebereichs des Zubereitungsautomaten verringert werden.

2. Auslassvorrichtung (1) nach Anspruch 1,
   **dadurch gekennzeichnet,**
   **dass** die Diffusorstufe (7) beabstandet zu der Austrittsöffnung (5) und/oder zu der Eintrittsöffnung (4) angeordnet ist, wobei insbesondere der Grundkörper (2) in einem Bereich zwischen der Diffusorstufe (7) und der Austrittsöffnung (5) einen konstanten Querschnitt aufweist.

3. Auslassvorrichtung (1) nach Anspruch 1 oder 2,

   **dadurch gekennzeichnet,**
   **dass** der Grundkörper (2) als Rohrkörper mit einem sich zumindest abschnittsweise von der Eintrittsöffnung (4) in Richtung der Austrittsöffnung (5) erweiternden Rohrquerschnitt ausgebildet ist, und/oder
   **dass** eine Querschnittsfläche der Eintrittsöffnung (4) kleiner als eine Querschnittsfläche der Austrittsöffnung (5), insbesondere mit einem Verhältnis zueinander in einem Bereich von 0,9:2 bis 1,5:2, bevorzugt 1:2 bis 1,2:2, ausgebildet ist.

4. Auslassvorrichtung (1) nach einem der vorstehenden Ansprüche 1 oder 3,
   **dadurch gekennzeichnet,**
   **dass** die Diffusorstufe (7) über die komplette Länge des Grundkörpers (2) ausgebildet ist.

5. Auslassvorrichtung (1) nach einem der Ansprüche 1 bis 3,
   **dadurch gekennzeichnet,**

   **dass** die Diffusorstufe (7) über maximal ein Drittel der Länge des Grundkörpers (2) ausgebildet ist.

6. Auslassvorrichtung (1) nach einem der vorstehenden Ansprüche,
   **dadurch gekennzeichnet,**
   **dass** die Längsachse (3) des Grundkörpers (2) in einer abgewinkelten und/oder gekrümmten Bahn verläuft.

7. Auslassvorrichtung (1) nach einem der vorstehenden Ansprüche,
   **dadurch gekennzeichnet,**
   **dass** der Grundkörper (3) als Krümmer, insbesondere als 90°-Krümmer, ausgebildet ist.

8. Auslassvorrichtung (1) nach einem der vorstehenden Ansprüche,
   **dadurch gekennzeichnet**,
   der die Diffusorstufe (7) in einem geraden Abschnitt des Grundkörpers (2) und/oder in einem gekrümmten Abschnitt des Grundkörpers (2) angeordnet ist.

9. Auslassvorrichtung (1) nach einem der vorstehenden Ansprüche,
   **dadurch gekennzeichnet**,
   der Grundkörper (2) zumindest zwei Diffusorstufen (7a, 7b) aufweist, die hintereinander durch die Form des Durchlasses (11) im Grundkörper (2) ausgeformt sind.

10. Auslassvorrichtung (1) nach einem der vorstehenden Ansprüche,
    **dadurch gekennzeichnet,**
    **dass** zumindest ein Leitblech innerhalb des Grundkörpers (2), insbesondere innerhalb des Durchlasses (11), angeordnet ist.

11. Auslassvorrichtung (1) nach einem der vorstehenden Ansprüche,
    **dadurch gekennzeichnet,**
    **dass** die zumindest eine Diffusorstufe (7) zur Reduzierung der Geschwindigkeit (v) des Zubereitungsmediums (8) zwischen der Eintrittsöffnung (4) und der Austrittsöffnung (5) um zumindest die Hälfte ausgelegt ist.

12. Auslassvorrichtung (1) nach einem der vorstehenden Ansprüche,
    **dadurch gekennzeichnet,**
    **dass** die Auslassvorrichtung (1) als ein Spritzgussteil ausgebildet ist.

13. Zubereitungsautomat für flüssige Lebensmittel, insbesondere Getränke und/oder Suppen, umfassend zumindest eine Auslassvorrichtung (1) nach einem der vorstehenden Ansprüche.

**14.** Zubereitungsautomat nach Anspruch 13,
**dadurch gekennzeichnet,**
**dass** die Eintrittsöffnung (4) der Auslassvorrichtung (1) mit einem das Zubereitungsmedium (8) fördernden Förderschlauch (9) des Zubereitungsautomaten verbunden ist, und die Austrittsöffnung (5) der Auslassvorrichtung (1) als ein freies Ende (10) zur Ausgabe des Zubereitungsmediums (8) in einen Behälter ausgebildet ist.

**15.** Zubereitungsautomat nach Anspruch 13 oder 14, umfassend zumindest zwei Auslassvorrichtungen (1), welche unterschiedliche Innenquerschnittsflächen in der Eintrittsöffnung (4) und/oder in der Austrittsöffnung (5) aufweisen.

FIG 1

7

13

1

4, 6

12

A2

A1

V1

11

5, 6

V2

8

8

2

3

12

13

FIG 2

7

A2

A1

1

4, 6

V1

11

V2

8

8

3

2

8

V2

5, 6

FIG 3

1

7   4, 6

2

9

9
4, 6

2

7

1

5, 6, 10   5, 6, 10

FIG 4

7b

1

5, 6

7a

A2'

A1'

A2

4, 6

A1

11

11

V1

V2

V3

8

8

8

3

2

Europäisches Patentamt
European Patent Office
Office européen des brevets

# EUROPÄISCHER RECHERCHENBERICHT

**Nummer der Anmeldung**

**EP 22 16 8329**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 2 705 782 A1 (SGL ITALIA S R L CON UNICO SOCIO [IT]) 12. März 2014 (2014-03-12) * Absätze [0002], [0008] – [0014], [0017] – [0020]; Ansprüche 1-3, 6, 7; Abbildungen * ----- | 1-15 | INV. A47J31/46 |
| X | DE 20 2013 101856 U1 (MELITTA SYSTEMSERVICE GMBH & CO KG [DE]) 16. Mai 2013 (2013-05-16) * Absätze [0002], [0006], [0012] – [0014]; Ansprüche 1, 5, 7, 9, 10; Abbildungen * ----- | 1-3,6-8, 12,13,15 | |

**RECHERCHIERTE SACHGEBIETE (IPC)**

**A47J**

Der vorliegende Recherchenbericht wurde für alle Patentansprüche erstellt

| Recherchenort | Abschlußdatum der Recherche | Prüfer |
|---|---|---|
| München | 29. August 2022 | Novelli, Bruno |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

EP 4 074 229 A1

**ANHANG ZUM EUROPÄISCHEN RECHERCHENBERICHT
ÜBER DIE EUROPÄISCHE PATENTANMELDUNG NR.**

EP 22 16 8329

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2022

| Im Recherchenbericht angeführtes Patentdokument | Datum der Veröffentlichung | Mitglied(er) der Patentfamilie | Datum der Veröffentlichung |
|---|---|---|---|
| EP 2705782 A1 | 12-03-2014 | BR 102013022885 A2 | 04-11-2014 |
| | | CO 7210069 A1 | 09-03-2015 |
| | | EP 2705782 A1 | 12-03-2014 |
| DE 202013101856 U1 | 16-05-2013 | KEINE | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2705782 A1